# EUROPÄISCHE PATENTSCHRIFT

(11) **EP 3 400 805 B1**
(45) Veröffentlichungstag und Bekanntmachung des Hinweises auf die Patenterteilung: **30.10.2019**
(21) Anmeldenummer: 18153441.3
(22) Anmeldetag: 25.01.2018
(51) Int. Cl.: A22C 11/00, B65B 19/34, B65B 25/06, B65B 35/24, B65B 5/08, B65B 5/10, B65B 35/26

(54) **VORRICHTUNG UND VERFAHREN ZUM ÜBERGEBEN UND EINLEGEN VON WÜRSTCHENGRUPPEN IN EINE VERPACKUNG**
DEVICE AND METHOD FOR TRANSFERRING AND LAY SAUSAGES GROUPS IN A PACKAGE
DISPOSITIF ET PROCÉDÉ DE TRANSFERT ET D'INSERTION DE GROUPES DE SAUCISSES DANS UN EMBALLAGE

(30) Priorität: 25.01.2017 DE 102017101464
(43) Veröffentlichungstag der Anmeldung: 14.11.2018
(73) Patentinhaber: VEMAG Maschinenbau GmbH, 27283 Verden/Aller (DE)
(72) Erfinder: Greif, Norman, 28211 Bremen (DE); Scharninghausen, Gerd, 27308 Kirchlinteln (DE); Brecht, Oliver, 27324 Eystrup (DE); Meininger, Thorsten, 27283 Verden (DE)
(74) Vertreter: Eisenführ Speiser

(56) Entgegenhaltungen:
- DE-A1- 4 334 238
- DE-A1- 19 610 965
- US-A- 4 733 518
- US-A1- 2007 045 083

## Beschreibung

Die Erfindung betrifft eine Vorrichtung zum Übergeben von mindestens einem Würstchen oder Lebensmittelportionen, insbesondere einer Gruppe von Würstchen, in eine Verpackung.

Solche Vorrichtungen sind im Stand der Technik bekannt. Beispielsweise offenbart die US-Patentanmeldung US 2011/0124276 A1 eine Vorrichtung zum Bilden von Würstchengruppen und zum Ablegen derselben in Verpackungen. Zu diesem Zweck verfügt die Vorrichtung über ein Gruppierband zur Bildung von Würstchengruppen und eine zweite Bandeinheit, welche die Würstchengruppen von einer Fläche ausgehend in unter dieser Fläche angeordnete Verpackungen befördert.

Das Dokument DE 43 34 238 A1 offenbart eine Vorrichtung zum Übergeben von Würstchen oder Lebensmittelportionen in eine Verpackung gemäß dem Oberbegriff des Anspruchs 1.

Nachteilig am beschriebenen Stand der Technik wirkt sich aus, dass insbesondere die Abgabegeschwindigkeit der Würstchengruppen in die Verpackungen begrenzt ist. Ein zu schnelles Bewegen der zweiten Bandeinheit würde dazu führen, dass die Würstchengruppen nicht länger fehlerfrei in die Verpackung abgelegt werden können. Darüber hinaus kann nicht sichergestellt werden, dass die Würstchengruppen korrekt ausgerichtet sind.

Vor diesem Hintergrund lag der Erfindung die Aufgabe zugrunde, eine Vorrichtung der eingangs bezeichneten Art dahingehend weiterzubilden, dass die im Stand der Technik bestehenden Nachteile möglichst weitgehend behoben werden. Insbesondere ist es Aufgabe der vorliegenden Erfindung, eine Vorrichtung und ein betreffendes Verfahren bereitzustellen, um Würstchen oder Lebensmittelportionen, insbesondere Gruppen von Würstchen, auf präzise Art und Weise mit hoher Geschwindigkeit und mit einer geringen Fehleranfälligkeit zu transferieren, insbesondere in eine Verpackung zu übergeben.

Erfindungsgemäß wird die Aufgabe bei einer Vorrichtung mit den technischen Merkmalen des kennzeichnenden Teil des Anspruchs 1 gelöst.

Hierdurch ergibt sich eine Reihe von erfindungsgemäßen Vorteilen. Zum einen ist es durch eine derartige Vorrichtung möglich, Lebensmittelportionen, insbesondere Gruppen von Würstchen, durch eine Bewegung der Fördervorrichtung in Produktflussrichtung mit hoher Geschwindigkeit in die Verpackung zu übergeben. Ferner ist die Vorrichtung hinsichtlich der Anzahl der erforderlichen Bauteile weniger komplex, wartungsarm, kostengünstig und mit einer hohen Zuverlässigkeit versehen. Darüber hinaus ermöglicht die Vorrichtung eine produktschonende und genaue Abgabe der Lebensmittelportionen in die Verpackung. Das Risiko mechanischer Beschädigungen der Wurstkörper durch den Ablagevorgang wird reduziert.

Weiterhin sind zwei miteinander kooperierende Fördervorrichtungen mit jeweils mindestens einem abstehenden Flügel vorgesehen und beabstandet so zueinander angeordnet, dass das mindestens eine Würstchen gleichzeitig auf zwei Flügel der beabstandeten Fördervorrichtungen auflegbar ist, und das durch synchrones gegenläufiges Rotieren der Fördervorrichtungen das mindestens einen Würstchen von den Flügeln auf oder in die Verpackung ablegbar ist.

Durch eine solche Anordnung mit zwei kooperierenden Fördervorrichtungen lässt sich ein weiterer Geschwindigkeitsvorteil im Hinblick auf die Transfer- und Ablagegeschwindigkeit in die Verpackung erzielen. Darüber hinaus wird das mindestens eine Würstchen stets parallel zur Bodenebene der Verpackung geführt. Hierdurch ergibt sich der Vorteil, dass die Würstchen mit hoher Genauigkeit in die Verpackung abgegeben werden können.

Darüber hinaus werden mechanische Einflüsse auf den Wurstkörper reduziert. Insgesamt wird somit ein schonendes und schnelles Ablegen der Würstchen in die Verpackung möglich.

Eine weitere alternative bevorzugte Ausführungsform zeichnet sich dadurch aus, dass die beiden Fördervorrichtungen jeweils als Flügelrad mit jeweils im Wesentlichen gleichmäßig beabstandeten Flügeln ausgebildet sind.

Bei einer solchen Anordnung ergibt sich der Vorteil, dass bei entsprechender Flügelradgestaltung jeweils ein Flügel an einer jeden Fördervorrichtung als Auflagefläche für das mindestens eine Würstchen dienen kann und ein weiterer Flügel der seitlichen Begrenzung und damit der seitlichen Führung. Hierdurch wird es möglich, dass die mehreren Würstchen geführt in die Verpackung abgegeben werden. Dadurch werden Geschwindigkeitsvorteile realisiert, denn durch zwei beanstandete Flügel können insbesondere die Enden einer Gruppe von Würstchen während der Rotation der Flügelräder geführt, insbesondere auch in Richtung auf die Verpackung oder in die Verpackung gedrückt werden entgegen der Wirkung der Massenträgheit. Hierdurch kann die Würstchengruppe mittels der Flügelräder beschleunigt und ggf. in die Verpackung hineingedrückt werden. Auch lässt sich die Ablagepräzision erhöhen. Insgesamt führt dieses zu einer höheren Zuverlässigkeit des Ablageprozesses. Auch trägt diese Funktionsintegration hinsichtlich der Bereitstellung einer Auflagefläche und der Bereitstellung einer seitlichen Führung insgesamt zu einer Reduktion der notwendigen Anzahl an Bauteilen bei. Hierdurch lassen sich im Hinblick auf die Vorrichtung selbst Fertigungskosten, Wartungskosten, und die Ersatzteilkosten gegenüber dem Stand der Technik reduzieren.

Weiterhin sind die Flügelräder gemäß einer bevorzugten Ausführungsform so ausgebildet und dimensioniert, dass zwei gegenüberliegende Flügel der Flügelräder in der Aufnahmestellung eine im Wesentlichen waagerechte Auflagefläche für eine Würstchengruppe bilden.

Hierdurch ergibt sich der Vorteil, dass die Flügelräder selbst als Auflagefläche dienen. Es ist also vorrichtungsseitig keine weitere Auflagefläche zu schaffen. Erneut ergeben sich hieraus eine Reduzierung der Anzahl der nötigen Bauteile und damit eine Kosteneinsparung im Hinblick auf die Vorrichtungsfertigung und auch die späteren Wartungsprozesse.

Weiterhin ist bevorzugt, dass jedes Flügelrad vier Flügel aufweist, die im Wesentlichen eine Kreuzform bilden.

Insbesondere durch die Kreuzform ergibt sich der bereits genannte Vorteil, dass jeweils ein Flügel eines jeden Flügelrades als Auflagefläche dient, ein anderer Flügel als seitliche Begrenzung. Ferner ermöglicht eine derartige Anordnung der Flügel eine exakte seitliche Führung des mindestens einen Würstchens während des Abgabeprozesses, welcher durch Drehen der Flügelräder erfolgt. Während der Drehung der Flügelräder befinden sich die mehreren Würstchen darüber hinaus in einer nicht nur seitlich, sondern auch nach oben und unten begrenzten Position. Hierdurch wird es möglich, Würstchen schneller abzulegen, als dieses unter reiner Nutzung der Erdbeschleunigung möglich wäre. Durch die Flügelräder ist es an dieser Stelle möglich, die Würstchen in Richtung der Verpackung zu beschleunigen.

Weiterhin sind zwei beabstandete Flügelräder der zwei Fördervorrichtungen mit vier Flügeln so ausgebildet und gegenläufig rotierbar, dass eine Gruppe von parallel und benachbart zueinander angeordneten Würstchen auf zwei benachbarten Flügeln der beabstandeten Flügelräder ablegbar sind und während einer gegenläufigen Rotation der Flügelräder an beiden gegenüberliegenden Enden der Würstchen einer Würstchengruppe von benachbarten Flügeln eines Flügelrades seitlich geführt werden auf ihre Bewegungsbahn in Richtung auf die Verpackung, und bei der weiteren Rotation der Flügelräder die Würstchengruppe von den Flügeln der benachbarten Flügelräder freikommt und auf oder in die Verpackung ablegbar ist.

Hierdurch ergeben sich die oben genannten Vorteile hinsichtlich einer hohen Ablagegeschwindigkeit und einer exakten Führung der Würstchen und somit insgesamt einer hohen Ablagequalität, womit insgesamt eine höhere Transferleistung ermöglicht wird, als dies im Stand der Technik heute gegeben ist.

Ferner ist die Oberfläche der Flügel gemäß einer bevorzugten Ausführungsform im Wesentlichen eben. Hierdurch ergibt sich der Vorteil, dass Würstchen und Würstchengruppen der Vorrichtung reibungsarm zugeführt werden können. Insofern ist die für die Zuführung benötigte Energie im Vergleich zu alternativen Oberflächenausformungen gering und es ist ferner möglich, die Würstchen im Hinblick auf die Qualität ihrer Außenhülle besonders schonend zu transportieren und schließlich in eine Verpackung einzulegen.

Gemäß einer bevorzugten Weiterbildung ist die Oberfläche der Flügel mindestens teilweise konkav und/oder konvex gekrümmt ausgebildet, sodass das Würstchen oder die Würstchengruppe während der Bewegung zwischen den Flügelrädern gezielt geführt und/oder zusätzlich beschleunigt oder verzögert wird.

Durch eine solche Ausbildung der Oberfläche der Flügel wird erreicht, dass mindestens eine Würstchen mit erhöhter Geschwindigkeit in die Verpackung ablegen zu können. Dabei dient die Flügeloberfläche, wenn sie wie oben beschrieben ausgebildet ist, als Mitnehmer, der es ermöglicht, das Würstchen oder die Würstchengruppe mit einer Beschleunigung größer als der Erdbeschleunigung in Richtung der Verpackung zu beschleunigen und zu bewegen. Auch kann durch bestimmte gekrümmte Formen eine Anpassung an die Form der Produkte, insbesondere die Form und Größe der Würstchen erreicht werden, was die Führung und die Übergabe verbessern kann.

Ferner weisen gemäß einer bevorzugten Ausführungsform die zwei Flügelräder parallel zueinander angeordnete Drehachsen auf, die so beabstandet sind, dass der Abstand der Drehachsen größer ist als die Länge der Würstchengruppe.

Eine solche Beabstandung der Drehachsen ermöglicht es, dass Würstchen oder Würstchengruppen stets über einen ausreichenden Spielraum verfügen, ohne dass die Würstchen oder deren Oberfläche beeinträchtigt wird, und gleichzeitig die Würstchen oder Würstchengruppen so geführt werden, dass ein hochpräzises Ablegen derselben in eine Verpackung ermöglicht wird.

Gemäß einer bevorzugten Weiterbildung weist die Vorrichtung eine Verstellvorrichtung auf, mittels welcher der Abstand der Flügelräder voneinander variiert werden kann, insbesondere in einem Bereich, der im Wesentlichen mit der Breite der einzulegenden Würstchengruppe korrespondiert.

Durch eine solche Vorrichtung wird es ermöglicht, die Vorrichtung innerhalb kürzester Zeit auf unterschiedliche Würstchenlängen anzupassen. Hierdurch wird eine insgesamt hohe Flexibilität erreicht. Rüstvorgänge können in kürzester Zeit vorgenommen werden. Insgesamt lassen sich somit die Kosten für einen Loswechsel reduzieren.

Weiterhin bevorzugt weist die Vorrichtung eine Zuführeinrichtung auf, mit einem umlaufenden Förderelement zum Zuführen von Würstchengruppen in eine Zuführrichtung zu der Fördervorrichtung oder den Fördervorrichtungen.

Mittels einer solchen Vorrichtung ist es möglich, Würstchen oder Würstchengruppen besonders schonend zuzuführen. Ferner ist es möglich, das umlaufende Förderelement derartig zu betreiben, dass Würstchen entsprechend gruppiert werden. Insoweit wird hier eine flexible Produktzuführung und gegebenenfalls Gruppierung ermöglicht.

Weiterhin bevorzugt verfügt die Vorrichtung über einen Anschlag, der den Zuführweg der Würstchengruppen in Zuführrichtung begrenzt und die Würstchengruppen bis zum Ablegen in die Verpackung in Zuführrichtung führt.

Hierdurch ergibt sich der Vorteil, dass das Würstchen oder die Würstchengruppe nicht nur geführt in die Vorrichtung eingebracht werden können, sondern diese Führung während des Ablageprozesses erhalten bleibt, sodass das Würstchen oder die Würstchengruppe insgesamt mit einer hohen Genauigkeit in die Verpackung abgelegt werden kann. Hierdurch ergibt sich mittelbar der Vorteil, dass die Störanfälligkeit einer solchen Vorrichtung gegenüber dem Stand der Technik reduziert wird.

Weiterhin wird bevorzugt, dass der Anschlag in Zuführrichtung gegen die Zuführvorrichtung der Würstchengruppe verfahrbar ist.

Hierdurch ergibt sich der Vorteil, dass die Vorrichtung im Hinblick auf unterschiedliche Wurstdurchmesser (Kaliber) genauso schnell angepasst werden kann, wie im Hinblick auf eine unterschiedliche Anzahl von Würstchen je Wurstgruppe. Insgesamt trägt all dies dazu bei, dass die Vorrichtung besonders flexibel einzusetzen ist und Rüstzeiten, wie auch Rüstkosten, reduziert werden.

Eine weitere bevorzugte Ausführungsform zeichnet sich dadurch aus, dass der Anschlag eine Antriebseinheit zum Verfahren des Anschlags aufweist.

Hierdurch können die oben genannten Vorteile hinsichtlich einer schnellen Anpassbarkeit der Vorrichtung im Hinblick auf unterschiedliche Wurstgruppengrößen und Wurstkaliber besonders schnell erreicht werden. Ferner ist es möglich, die Vorrichtung anzupassen, ohne dass ein Bediener unmittelbar an der Vorrichtung Einstellarbeiten vornehmen muss. Auch ist insgesamt eine Automatisierung des Einstellvorganges möglich.

Weiterhin wird bevorzugt, dass das mindestens eine Flügelrad zumindest teilweise aus Kunststoff besteht, insbesondere aus lebensmittelechtem Kunststoff. Hierdurch ergibt sich der Vorteil, dass das Flügelrad nicht nur kostengünstig gefertigt werden kann, sondern auch leicht zu reinigen ist und kostengünstig ersetzt werden kann.

Weiterhin weist die Vorrichtung gemäß einer bevorzugten Ausführungsform eine Kopplungsvorrichtung auf, die eine Flügelradaufnahme aufweist und dazu eingerichtet ist, eine lösbare Verbindung mit dem Flügelrad bereitzustellen. Hierdurch ergibt sich der Vorteil einer Reduzierung von Rüstzeiten. Nicht nur im Wartung- und Verschleißfall ist eine schnelle Austauschbarkeit der Flügelräder gewährleistet, sondern auch für den Fall, dass die Vorrichtung auf ein alternatives Fertigungslos anzupassen ist. Hierbei ist beispielsweise denkbar, dass die Würstchen unterschiedliche Biegesteifigkeiten aufweisen, die je nach Los unterschiedliche Flügelbreiten, bzw. -tiefen, erfordern. Insofern ermöglicht es eine Austauschbarkeit der Flügelräder besonders vorteilhaft, auf unterschiedliche Fertigungsbedingungen reagieren zu können.

Darüber hinaus weist die Vorrichtung besonders bevorzugt eine elektrische Antriebseinheit zum Antreiben der rotierbaren Fördervorrichtung, insbesondere der Flügelräder, auf, wobei die Antriebseinheit vorzugsweise einen Linearmotor oder Schrittmotor zum Antrieb des mindestens einen Flügelrads aufweist.

Hierdurch ergibt sich der Vorteil, dass das eine oder die mehreren Flügelräder hinsichtlich ihres Bewegungsprofils exakt gesteuert werden können. So lässt sich beispielsweise das Beschleunigungsverhalten der einen oder mehreren Fördervorrichtungen exakt auf eine möglichst hohe Ablagegeschwindigkeit bei einer gleichzeitig maximalen Materialschonung auslegen. Auch können beispielsweise für unterschiedliche Fertigungslose unterschiedliche Bewegungsprofile hinterlegt werden, um für unterschiedliche Produkte ein optimiertes Ablegen im die Verpackung zu ermöglichen.

Weiterhin verfügt die Antriebseinheit besonders bevorzugt über eine Steuerungseinrichtung zur Steuerung insbesondere der Haltepositionen, Bewegungen und Beschleunigungen des mindestens einen Flügelrades.

Erneut wird hier in Verbindung mit den oben genannten Vorteilen ein optimierter Ablageprozess ermöglicht. Es können auf der Seite der Steuerung eine Vielzahl von Parametern für unterschiedliche Produkte, Produktgrößen, Wurstgruppengrößen und Produktkaliber hinterlegt werden.

In einem zweiten Aspekt wird die der Erfindung zugrundeliegende Aufgabe durch ein Verfahren zum Übergeben von Würstchengruppen in eine Verpackung gemäß Anspruch 12 gelöst, umfassend die Schritte: Einbringen einer Würstchengruppe in eine Übergabevorrichtung, die mindestens ein Flügelrad aufweist, Rotation des mindestens einen Flügelrades, insbesondere um einen Winkel von 90°, entlang einer Drehachse, Abgabe der Würstchengruppe in die Verpackung.

Durch ein solches Verfahren wird eine präzise und schnelle Abgabe der Würstchengruppen in eine Verpackung ermöglicht. Gleichzeitig ermöglicht es das Verfahren, die Würstchen oder Würstchengruppen mit einer geringen Störanfälligkeit und hoher Präzision in eine Verpackung abzugeben.

Weiterhin bevorzugt verfügt das Verfahren zusätzlich über den Schritt: Gruppieren von Würstchen, insbesondere mit Hilfe eines Dreiecksbandes.

Hierdurch ergibt sich der Vorteil, dass die Würstchen mittels eines solchen Bandes nicht nur zugeführt werden können, sondern auch beliebige Gruppen von Würstchen erstellt werden können.

Erfindungsgemäß ist die Vorrichtung zum Einlegen von Würstchengruppen eine Vorrichtung, wie sie oben beschrieben worden ist. Hierdurch ergeben sich die bereits genannten und diskutierten Vorteile analog.

In einem dritten Aspekt wird die der Erfindung zugrundeliegende Aufgabe durch ein System zum Gruppieren und Einlegen von Würstchen in Verpackungen nach Anspruch 14 gelöst, mindestens umfassend: Eine Zuführeinrichtung zum Zuführen einzelner Würstchen quer zu Transportrichtung auf ein Transportband, wobei der Abstand der Würstchen auf dem Transportband definierbar ist, ein Transportbandzuführen der Würstchen von der Zuführeinrichtung zu einer Einrichtung zum Einlegen von Würstchengruppen in eine Verpackung, ein Drehachsband zum Gruppieren von Würstchen und zur Bildung von Würstchengruppen, eine Einrichtung zum Einlegen von Würstchengruppen in eine Verpackung.

Durch ein solches System lässt sich der Vorteil erzielen, dass einzelne Würstchen insgesamt in hoher Geschwindigkeit gruppiert und in eine Verpackung übergeben werden können. Hinsichtlich weiterer Vorteile sei auf obige Ausführungen verwiesen.

Weitere Merkmale und Vorteile der Erfindung ergeben sich aus den beigefügten Ansprüchen und der folgenden Beschreibung, in der Ausführungsbeispiele anhand schematischer Zeichnungen im Einzelnen erläutert werden.

Dabei zeigt:
Fig. 1 das Ausführungsbeispiel der erfindungsgemäßen Übergabevorrichtung in einer Seitenansicht;
Fig. 2 das Ausführungsbeispiel der erfindungsgemäßen Übergabevorrichtung in einer Seitenansicht parallel zur Bewegungsrichtung der Verpackungen;
Fig. 3 das Ausführungsbeispiel der erfindungsgemäßen Übergabevorrichtung in einer Draufsicht;
Fig. 4 das Ausführungsbeispiel der Übergabevorrichtung in einer perspektivischen Darstellung;
Fig. 5 ein Ausführungsbeispiel der erfindungsgemäßen Übergabevorrichtung, wobei einzelne Verfahrensschritte des Übergabevorgangs einer Würstchengruppe in eine Verpackung dargestellt sind;
Fig. 6 ein alternatives Ausführungsbeispiel der erfindungsgemäßen Übergabevorrichtung, wobei die Flügel über eine alternative Kontuierung verfügen.

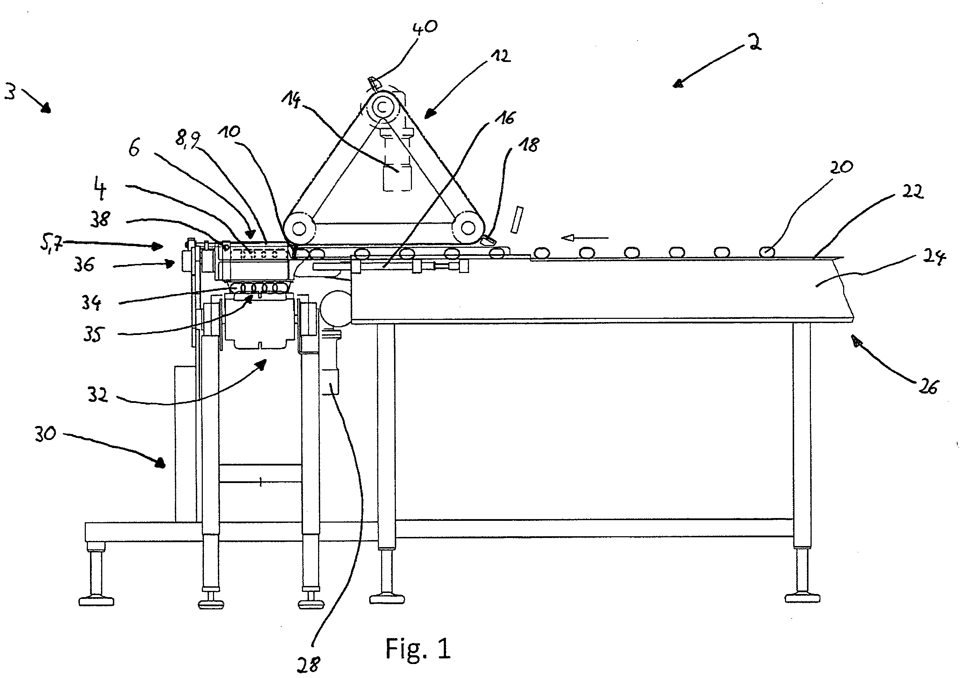

Fig. 1 zeigt eine Gruppier- und Übergabevorrichtung 2, welche im Wesentlichen eine Zuführbandeinheit 26, ein Dreiecksband 12, eine erfindungsgemäße Übergabe- oder Transfer- Vorrichtung 6, sowie eine Verpackungstransfereinrichtung 32 aufweist. Die Zuführbandeinheit 26, das Dreiecksband 12, die Übergabe-Vorrichtung 6 und die Verpackungstransfereinrichtung 32 sind auf einem Grundgerüst 30 angeordnet. Das Grundgerüst 30 kann in an sich bekannter Weise aus unterschiedlichen einzelnen Gerüsten bestehen.

Mittels der Zuführbandeinheit 26 werden im Wesentlichen konstant beabstandete Würstchen 20, die quer zur Bewegungsrichtung des Zuführbandes 22 ausgerichtet sind, zugeführt. Die Zuführbandeinheit 26 verfügt darüber hinaus über eine Abdeckung 24, sowie eine Spanneinrichtung 16. Darüber hinaus verfügt die Zuführbandeinheit 26 über eine Antriebseinheit, die hier nicht gezeigt ist. Abschnittsweise oberhalb der Zuführbandeinheit ist ein Dreiecksband 12 angeordnet. An dem Dreiecksband 12 befinden sich Mitnehmer 40, 18, 10. Ferner wird das Dreiecksband 12 durch die Antriebseinheit 14 angetrieben. Die Antriebseinheit 14 ermöglicht einen Betrieb des Dreiecksbandes 12 und der damit verbundenen Mitnehmer 40, 18, 10 mit unterschiedlichen Geschwindigkeitsprofilen, unter anderem sowohl intermittierend als auch kontinuierlich.

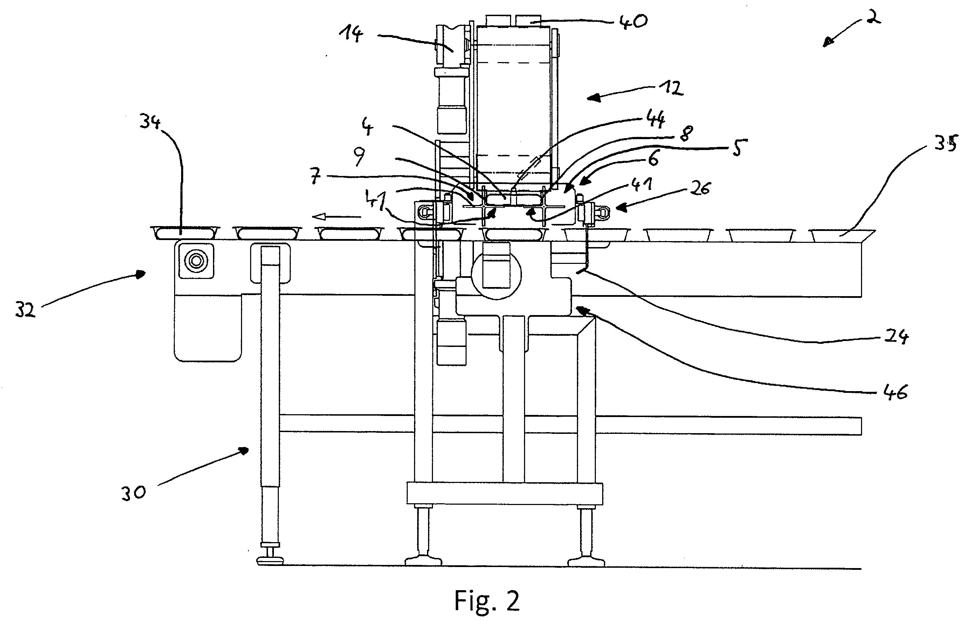

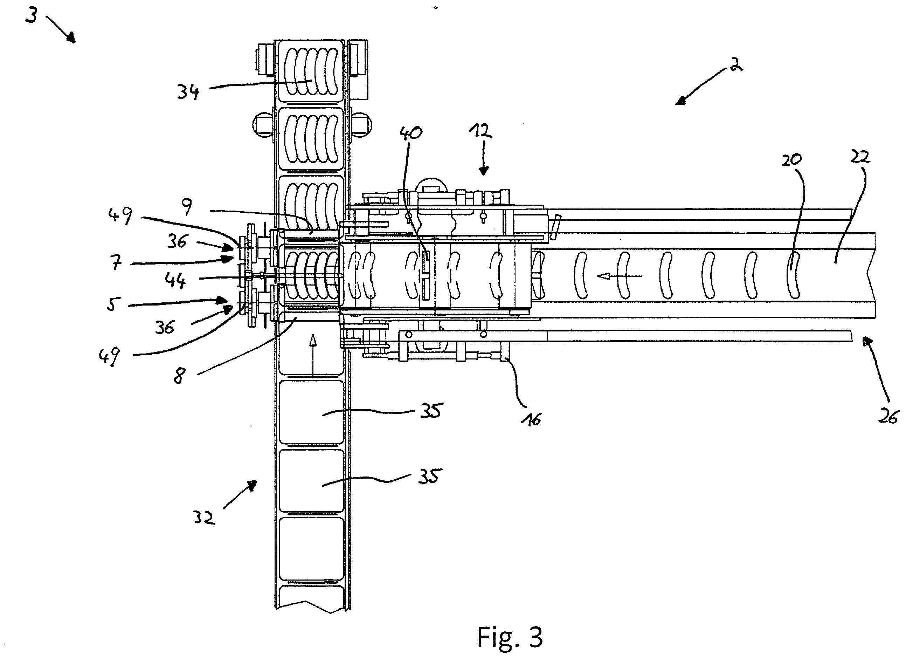

Im hier dargestellten Fall wird das Dreiecksband 12 zur Bildung von Würstchengruppen 4 verwendet. Zu diesem Zweck wird das Dreiecksband 12 intermittierend und mit einer Geschwindigkeit betrieben, die größer ist als die Fördergeschwindigkeit der Zuführbandeinheit 26. Auf diese Weise werden die beabstandeten Würstchen 20 mit Hilfe der Mitnehmer 40, 18, 10 in eine gewünschte Gruppengröße gebracht. Beispielsweise weist die Würstchengruppe 4 fünf Würstchen auf. Das Dreiecksband 12 hat neben der Gruppierung die Aufgabe, Würstchengruppen 4 der Übergabe-Vorrichtung 6 zuzuführen. Die Übergabe-Vorrichtung 6 dient zum Übergeben eines einzelnen Würstchens 20 vorzugsweise einer Würstchengruppe 4 an eine Verpackung 35 und weist ein erstes Flügelrad 8 und ein weiteres Flügelrad 9, welches z. B. in Figur 2, 3 sichtbar ist, auf. Hinsichtlich insbesondere des zweiten Flügelrades 9 sei auf Figur 2 verwiesen. Darüber hinaus verfügt die Transfereinheit 6 über einen verstellbaren Anschlag 38. Ferner weist ein jedes Flügelrad 8, 9 eine Antriebseinheit 36 auf.

Die Antriebseinheit 36 ermöglicht es in Verbindung mit einer Steuerungseinrichtung (nicht dargestellt), das Flügelrad 8 in Verbindung mit einem zweiten Flügelrad 9, welches in Fig. 1 aufgrund der gewählten Perspektive nicht erkennbar ist, zu bewegen. Die Bewegung kann unterschiedliche Rotationswinkel umfassen, unterschiedliche Beschleunigungen und unterschiedliche Stoppositionen sowie dergleichen. Die zugeführte Würstchengruppe 4 liegt nun auf jeweils einem Flügel 41 des ersten Flügelrades 8 und eines weiteren Flügelrades 9 auf. Durch eine Rotation des Flügelrades 8, welche koordiniert mit der Rotation des zweiten Flügelrades 9 erfolgt, wird die Würstchengruppe 4 relativ zu einer Verpackung 35 geführt, abgesenkt und schließlich an diese übergeben (eingelegte Würstchengruppe 34).

Die Verpackungen 35 werden mit einer Verpackungstransfereinrichtung 32 zugeführt. Die Verpackungstransfereinrichtung 32 verfügt in an sich bekannter Weise ebenfalls über eine Antriebseinrichtung 28. Durch einen intermittierenden Betrieb der Verpackungstransfereinrichtung 32 wird jeweils eine leere Verpackung 35 unterhalb der Übergabe-Vorrichtung 6 positioniert und anschließend mit einer Würstchengrupe 4 gefüllt. Daraufhin wird eine weitere leere Verpackung 35 zugeführt und gleichzeitig die gefüllte Verpackung 34 abgeführt.

In Fig. 2 ist die Anordnung des zweiten Flügelrades 9 erkennbar. Die Würstchengruppe 4 liegt auf jeweils einem Flügel 41 des ersten Flügelrades 8 und des zweiten Flügelrades 9 auf. Ferner wird die Würstchengruppe 4 durch einen weiteren Flügel 41 des ersten Flügelrades 8 und des zweiten Flügelrades 9 seitlich geführt. Ein Höhenanschlag 44 führt die Würstchengruppe 4 schließlich entgegen der Ablagerichtung. In Bewegungsrichtung des Zuführbandes 22 wird die Würstchengruppe 4 durch einen Anschlag 38 (s. Fig. 1) begrenzt. Darüber hinaus dient der Mitnehmer 10 des Dreiecksbandes 12 (s. Fig. 1) der Begrenzung der Würstchengruppe 4 gegen die Bewegungsrichtung des Zuführbandes 22. Somit ist die Würstchengruppe 4 in allen möglichen Richtungen begrenzt. Durch Drehen der Flügelräder 8, 9 entgegengesetzt zueinander und im Hinblick auf die Position der Flügel 41 koordiniert miteinander können die Würstchengruppen 4 geführt in die Verpackung 35 übergeben werden. Die Verpackungstransfereinrichtung 32 verfügt schließlich noch über eine Antriebsvorrichtung 46, die einen kontinuierlichen und intermittierenden Betrieb des betreffenden Bandes ermöglicht.

Eine analoge Situation ist in Fig. 3 in einer Draufsicht dargestellt. Ergänzend zu den bereits angeführten Bauteilen sind Antriebseinheiten 36 der Flügelräder 8, 9 dargestellt. Zusammen mit einer Steuerungseinheit (nicht dargestellt) ermöglichen es diese, die Flügelräder 8, 9 mit den gewünschten Bewegungsprofilen zu betreiben. Wie bereits ausgeführt, sind die unterschiedlichen Drehwinkel, Beschleunigung, sowie unterschiedliche Beziehungen der Positionen des ersten Flügelrades 8 relativ zum zweiten Flügelrad 9 sowie unterschiedliche Drehrichtungen möglich. Ferner verfügen die Flügelräder 8, 9 über Drehachsen 49, die hinsichtlich ihrer Beabstandung zueinander variabel sein können.

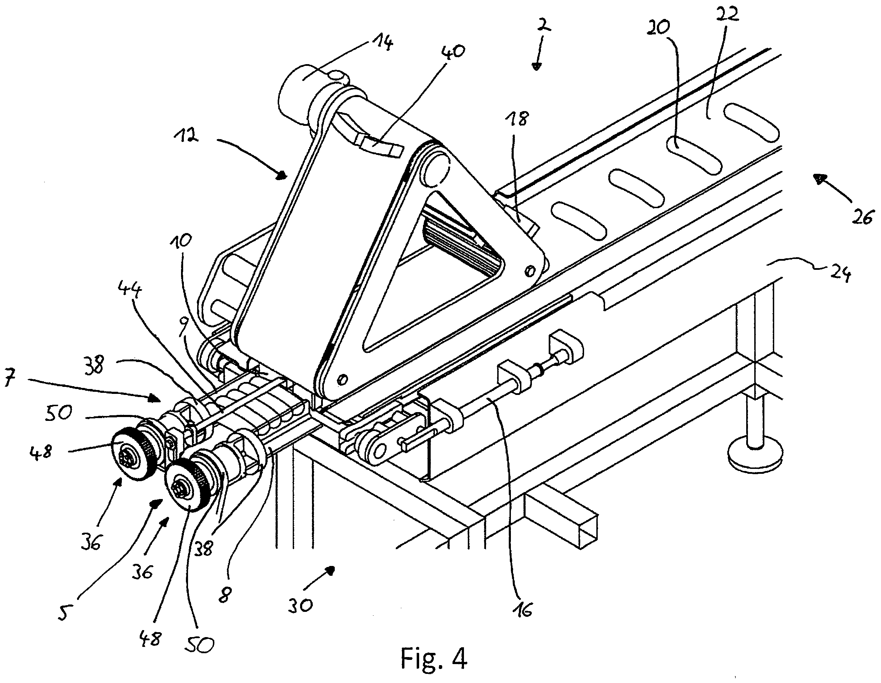

In der perspektivischen Darstellung aus Fig. 4 ist die Verpackungstransfereinrichtung 32 nicht dargestellt. Vielmehr ist ein Ausführungsbeispiel der Flügelräderantriebseinheiten 36 dargestellt, bei denen eine Zuführung von kinetischer Energie über Riemengetriebe 50 erfolgt. Darüber hinaus ist jedoch auch eine Kraftzuführung mittels beispielsweise der Räder 40 möglich.

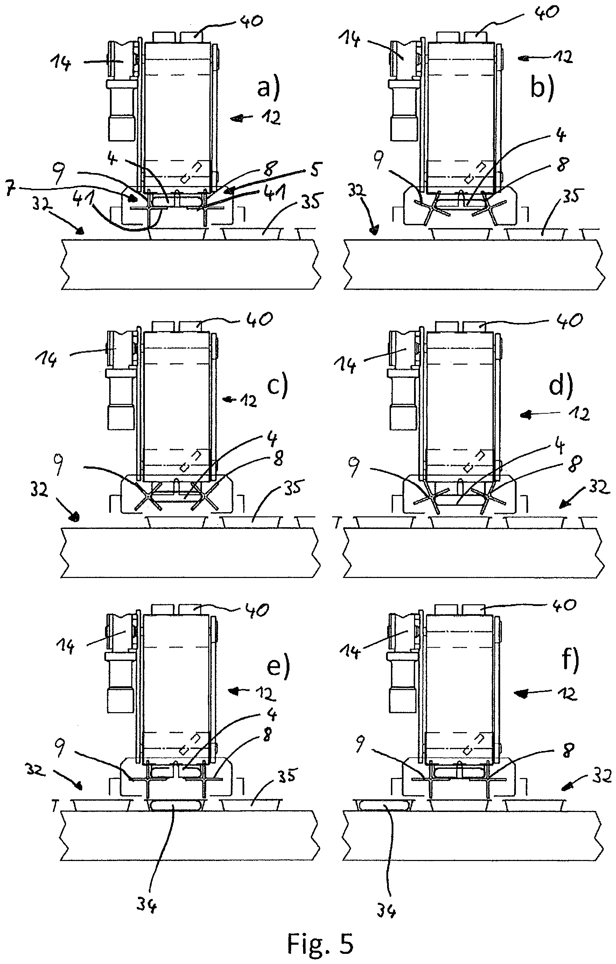

In Fig.5 sind nun einzelne Verfahrensschritte des Transfervorganges einer Würstchengruppe 4 hinein in eine Verpackung 35 dargestellt. Fig. 5A zeigt zunächst die Zuführung einer Würstchengruppe 4. Die Flügel 41 der Flügelräder 8, 9 befinden sich in waagerechter Stellung. Der jeweils senkrecht auf dem Flügel 41 stehende Flügel 41 begrenzt die Würstchengruppe 4 in seitliche Richtung. In Fig. 5B ist eine bezogen auf einander gegenläufige Rotation der Flügelräder 8 und 9 vorgenommen worden. Die Würstchengruppe 4 befindet sich nun in einer Art Förderkammer und wird erneut seitlich begrenzt. In Fig. 5C sind die Flügelräder 8 und 9 nunmehr um etwa 45° gegenüber der Ausgangsstellung aus Fig. 5A rotiert.

Wie zu erkennen ist, befindet sich die Würstchengruppe 4 erneut in einer aufgespannten Förderkammer und ist in dieser geführt und fixiert. Gleiches gilt für Fig. 5D, in der die Flügelräder 8, 9 in Betriebsdrehrichtung entgegengesetzt zueinander weiter rotiert worden sind. Darüber hinaus ist die Würstchengruppe 4 in der Aufnahmekammer enthalten und geführt. Erst in Fig. 5E sind die Flügelräder 8, 9 um nunmehr 90° entgegengesetzt zueinander bezogen auf den Ausgangszustand in Fig. A rotiert worden. Die Würstchengruppe 4 wird nun freigegeben und fällt in die Verpackung 35. Während dieses Abgabeprozesses besteht erneut eine seitliche Führung der Würstchengruppe. Gleichzeitig kann mit Erreichen der beschriebenen Stellung der Flügelräder 8, 9 eine neue Würstchengruppe 4 zugeführt werden. Ferner wird die Verpackungstransfereinrichtung 32 so verfahren, dass eine neue, ungefüllte Verpackung 35 unterhalb der Übergabe-Vorrichtung 6 positioniert wird. Anschließend beginnt das Verfahren von neuem mit dem in Fig. 5A gezeigten Schritt.

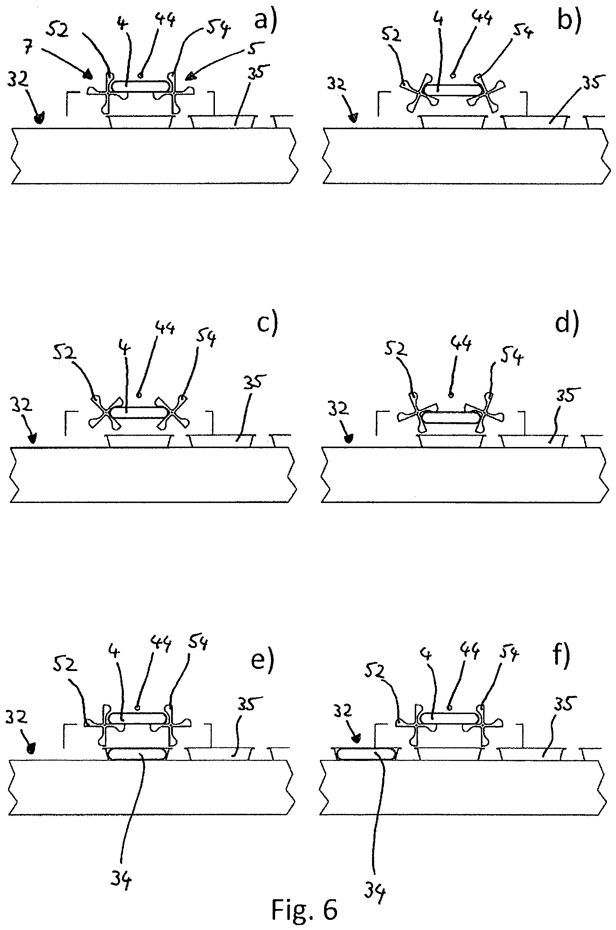

In Fig. 6 sind die im Rahmen der Fig. 5 diskutierten Verfahrensschritte analog dargestellt. Allerdings sind die Flügelräder 52, 54 alternativ ausgestaltet. Die Flügelräder 52 und 54 verfügen in dieser alternativer Ausführungsform über Mitnehmer bzw. eine angepasste Kontuierung. Diese Mitnehmer der Flügelräder 52, 54 sind im Wesentlichen auf die Form der zu transferierenden Güter - und somit der Würstchen - zumindest teilweise angepasst. In an sich bekannter Weise gelangt nun eine Würstchengruppe 4 in Fig. 6A auf jeweils einen Flügel 41 des jeweils ersten und zweiten Flügelrades 52, 54. Die betreffende Auflagefläche ist eben ausgebildet. In Fig. 6B sind das erste Flügelrad 52 und das zweite Flügelrad 54 nun entgegengesetzt zueinander um einen Winkel, der etwa 20° bis 30° entspricht, rotiert. Wie der Fig. 6B zu entnehmen ist, bietet die alternative Ausführungsform oder Ausgestaltung der Flügelräder 52, 54 den Vorteil einer verbesserten Führung der Würstchengruppe 4.

Auch können im Wesentlichen höhere Beschleunigungen in Richtung der Verpackungen 35 mittels solcher Flügelformen induziert werden. In bereits aus Fig. 5 bekannter Weise sind in Fig. 6C die Flügelräder 52 und 54 um nunmehr etwa 45° gegenüber der Ausgangsposition der Fig. 6A entgegengesetzt zueinander rotiert worden. Die Würstchengruppe 4 ist durch die Flügelräder 52, 54 fixiert. Gleiches gilt für den Verfahrensschritt aus Fig. 6D. Erst in Verfahrensschritt E, bei dem die Flügelräder 52, 54 insgesamt und im Vergleich zu Fig. 6A um 90° entgegengesetzt zueinander rotiert worden sind, erfolgt die Abgabe der Würstchengruppe 4 in die Schale 35. Gleichzeitig wird in bekannter Weise eine neue Würstchengruppe 4 zugeführt. Nach dem weiteren Transport der nunmehr in die Verpackung eingelegten Würstchengruppe 34 kann eine neue Verpackung 35 unterhalb der Transferienrichtung positioniert werden und das Verfahren beginnt mit Schritt 6A von neuem.

### Liste der verwendeten Bezugszeichen

- 2: Gruppier- und Übergabevorrichtung
- 3: System zum Gruppieren und Einlegen von Würstchen in Verpackungen
- 4: Würstchen, gruppiert, (Würstchengruppe)
- 5: Erste Fördervorrichtung
- 6: Übergabe-Vorrichtung
- 7: Zweite Fördervorrichtung
- 8: Erstes Flügelrad
- 9: Zweites Flügelrad
- 10: Mitnehmer
- 12: Dreiecksband
- 14: Antriebseinheit des Dreiecksbandes
- 16: Spanneinrichtung
- 18: Mitnehmer
- 20: Würstchen
- 22: Zuführband
- 24: Abdeckung
- 26: Zuführbandeinheit
- 28: Antriebseinrichtung
- 30: Grundgerüst
- 32: Verpackungstransfereinrichtung
- 34: In Verpackung eingelegte Würstchengruppe
- 35: Verpackung
- 36: Flügelrad-Antriebseinheit
- 38: Anschlag
- 40: Mitnehmer
- 41: Flügel
- 44: Höhenanschlag
- 46: Antriebsvorrichtung
- 48: Rad
- 49: Drehachsen
- 50: Riementrieb
- 52: Erstes Flügelrad mit Mitnehmer
- 54: Zweites Flügelrad mit Mitnehmer

## Patentansprüche

1. Vorrichtung zum Übergeben von mindestens einem Würstchen oder Lebensmittelportionen, insbesondere einer Gruppe von Würstchen (4), in eine Verpackung (35),
wobei zwei miteinander kooperierende Fördervorrichtungen (5, 7) mit jeweils mindestens einem abstehenden Flügel (41) vorgesehen sind und beabstandet so zueinander angeordnet sind, dass das mindestens eine Würstchen (4) gleichzeitig auf zwei Flügel (41) der beanstandeten Fördervorrichtungen (5, 7) auflegbar ist, und dass durch synchrones gegenläufiges Rotieren der Fördervorrichtungen (5, 7) das mindestens eine Würstchen (4) von den Flügeln (41) auf oder in die Verpackung (35) ablegbar ist, wobei die beiden Fördervorrichtungen (5, 7) jeweils als Flügelrad (8, 9, 52, 54) mit jeweils mindestens zwei, besonders bevorzugt vier, im Wesentlichen gleichmäßig beabstandeten Flügeln (41) ausgebildet sind, und
die Flügelräder (8, 9, 52, 54) so ausgebildet und dimensioniert sind, dass zwei gegenüberliegende Flügel (41) der Flügelräder (8, 9, 52, 54) in der Aufnahmestellung eine im Wesentlichen waagerechte Auflagefläche für eine Würstchengruppe (4) bilden,
**dadurch gekennzeichnet, dass** zwei beabstandete Flügelräder (8, 9, 52, 54) der zwei Fördervorrichtungen (5, 7) mit jeweils vier Flügeln (41) so ausgebildet und gegenläufig rotierbar sind, dass eine Gruppe von parallel und benachbart zueinander angeordneten Würstchen (4) auf zwei benachbarten Flügeln (41) der beabstandeten Flügelräder ablegbar sind, während auf jeder Seite der Gruppe der Würstchen jeweils ein Flügel (41) der Flügelräder (8, 9, 52, 54) eine seitliche Begrenzung für die Würstchen bildet, und während einer gegenläufigen Rotation der Flügelräder (8, 9, 52, 54) eine Würstchengruppe (4) an beiden gegenüberliegenden Enden der Würstchen (20) von benachbarten Flügeln (41) eines Flügelrades (8, 9, 52, 54) seitlich geführt wird auf ihrer Bewegungsbahn in Richtung auf die Verpackung (35), und bei der weiteren Rotation der Flügelräder (8, 9, 52, 54) die Würstchengruppe (4) von den Flügeln (41) der benachbarten Flügelräder (8, 9, 52, 54) freikommt und auf oder in die Verpackung (35) ablegbar ist.

2. Vorrichtung nach Anspruch 1,
dadurch ergänzen, dass jedes Flügelrad (8, 9, 52, 54) vier Flügel (41) aufweist, die im Wesentlichen eine Kreuzform bilden.

3. Vorrichtung nach mindestens einem der vorhergehenden Ansprüche,
**dadurch gekennzeichnet, dass** die Oberfläche der Flügel (41) im Wesentlichen eben ist.

4. Vorrichtung nach mindestens einem der vorhergehenden Ansprüchen,
**dadurch gekennzeichnet, dass** die Oberfläche der Flügel (41) wenigstens teilweise konkav und/oder konvex gekrümmt ausgebildet ist, sodass das Würstchen (20) oder die Würstchengruppe (4) während der Bewegung zwischen den Flügelrädern (52, 54) gezielt geführt und/oder zusätzlich beschleunigt oder verzögert wird.

5. Vorrichtung nach mindestens einem der vorhergehenden Ansprüche,
**dadurch gekennzeichnet, dass** die Flügelräder (8, 9, 52, 54) mit gleichmäßig beabstandeten Flügeln (41) ausgebildet sind, die während ihrer gegenläufigen Rotation Aufnahme- und Förderkammern für ein Würstchen (20) oder eine Gruppe von Würstchen (4) bilden.

6. Vorrichtung nach einem der Ansprüche 1-5,
**dadurch gekennzeichnet, dass** die zwei Flügelräder (8, 9, 52, 54) parallel zueinander angeordnete Drehachsen (49) aufweisen und vorzugsweise so beabstandet sind, dass der Abstand der Drehachsen (49) größer ist, als die Länge der Würstchengruppe (4).

7. Vorrichtung nach einem der vorstehenden Ansprüche,
**dadurch gekennzeichnet, dass** die Vorrichtung eine Verstellvorrichtung aufweist, mittels welcher der Abstand der Flügelräder (8, 9, 52, 54) voneinander variiert werden kann, insbesondere in einem Bereich, der im Wesentlichen mit der Breite der einzulegenden Würstchengruppen (4) korrespondiert.

8. Vorrichtung nach einem der Ansprüche 1-7,
aufweisend eine Zuführbandeinheit (26) mit einem umlaufenden Förderelement (22) zum Zuführen von Würstchengruppen (4) in eine Zuführrichtung zu der Fördervorrichtung (5) oder den Fördervorrichtungen (5, 7); und/oder einen Anschlag (38), der den Zuführweg der Würstchengruppen (4) in Zuführrichtung begrenzt und die Würstchengruppe (4) bis zum Ablegen in die Verpackung (35) in Zuführrichtung führt, wobei vorzugsweise der Anschlag (38) in Zuführrichtung und gegen die Zuführrichtung der Würstchengruppen (4) verstellbar ist und/oder der Anschlag (38) eine Antriebseinheit zum Verfahren des Anschlags aufweist; und
die beiden Flügelräder(8, 9, 52, 54) zumindest teilweise aus Kunststoff, insbesondere aus lebensmittelechtem Kunststoff, besteht.

9. Vorrichtung nach einem der vorhergehenden Ansprüche,
**gekennzeichnet durch** eine Kopplungsvorrichtung, die eine Flügelradaufnahme aufweist und dazu eingerichtet ist, eine lösbare Verbindung mit dem Flügelrad bereitzustellen.

10. Vorrichtung nach einem der vorhergehenden Ansprüche,
**gekennzeichnet durch** mindestens eine elektrische Antriebseinheit (36) zum Antreiben der rotierbaren Fördervorrichtungen (5, 7), insbesondere der Flügelräder (8, 9, 52, 54), wobei die Antriebseinheit (36) vorzugsweise einen Linearmotor oder Schrittmotor zum Antrieb der beiden Flügelräder (8, 9, 52, 54) aufweist.

11. Vorrichtung nach Anspruch 10, **dadurch gekennzeichnet, dass** die Antriebseinheit (36) eine Steuerungseinrichtung zur Steuerung insbesondere der Haltepositionen, Bewegungen und Beschleunigungen der beiden Flügelräder (8, 9, 52, 54) aufweist.

12. Verfahren zum Übergeben von Würstchengruppen (4) in eine Verpackung (35), umfassend die Schritte:
- Einbringen einer Würstchengruppe (4) in eine Übergabevorrichtung (6) nach einem der Ansprüche 1-10, die mindestens zwei miteinander kooperierende Flügelräder (8, 9, 52, 54) aufweist;
- Rotation der beiden Flügelräder (8, 9, 52, 54), insbesondere um einen Winkel von 90°, entlang seiner Drehachse (49);
- Abgabe der Würstchengruppe (4) in die Verpackung (35);
Ablegen einer Gruppe von parallel und benachbart zueinander angeordneten Würstchen (20) auf zwei benachbarten Flügeln (41) zweier beabstandeter Flügelräder (8, 9, 52, 54), während auf jeder Seite der Gruppe der Würstchen jeweils ein Flügel (41) der Flügelräder (8, 9, 52, 54) die Würstchen seitlich führt;
- Gegenläufige Rotation der Flügelräder (8, 9, 52, 54), während die Enden der Würstchen (20) von Flügeln (41) benachbarter Flügelräder (8, 9, 52, 54) seitlich geführt werden auf ihrer Bewegungsbahn in Richtung auf die Verpackung (35);
- Ablegen der Würstchengruppe (4) in die Verpackung (35).

13. Verfahren nach Anspruch 12, zusätzlich aufweisend den Schritt:
- Gruppieren von Würstchen (20), insbesondere mithilfe eines Dreiecksbandes (12).

14. System (3) zum Gruppieren und Einlegen von Würstchen in Verpackungen, mindestens umfassend:
- eine Zuführeinrichtung zur Zuführung einzelner Würstchen (20) quer zur Transportrichtung auf eine Zuführbandeinheit (26), wobei der Abstand der Würstchen (20) auf der Zuführbandeinheit (26) definierbar ist;
- eine Zuführbandeinheit (26) zur Führung der Würstchen (20) von der Zuführeinrichtung zu einer Einrichtung (6) zum Einlegen von Würstchengruppen in eine Verpackung;
- ein Dreiecksband (12) zur Gruppierung von Würstchen (20) und Bildung von Würstchengruppen (4);
- eine Vorrichtung (6) zum Übergeben der Würstchengruppen (4) in eine Verpackung (35) nach einem der Ansprüche 1-10.

## Claims

1. An apparatus for transferring at least one sausage link or food portions, in particular a group of sausage links (4), into a packaging item (35),
wherein two co-operating conveyor devices (5, 7) each having at least one protruding vane (41) are provided and are arranged spaced apart in relation to each other in such a way that the at least one sausage link (4) can be placed simultaneously on two vanes (41) of the spaced-apart conveyor devices (5, 7), and that by synchronous rotation of the conveyor devices (5, 7) in opposite directions the at least one sausage link (4) can be placed onto or into the packaging item (35) by the vanes (41),
wherein the two conveyor devices (5, 7) are each designed as an impeller (8, 9, 52, 54), each having at least two, preferably four vanes (41) spaced substantially equally apart, and
the impellers (8, 9, 52, 54) are designed and dimensioned so that two opposite vanes (41) of the impellers (8, 9, 52, 54) form in the receiving position a substantially horizontal support surface for a group of sausage links (4),
**characterized in that** two spaced-apart impellers (8, 9, 52, 54) of the two conveyor devices (5, 7), each having four vanes (41), are designed and can be rotated in opposite directions such that a group of parallel and adjacently arranged sausage links (4) can be placed on two adjacent vanes (41) of the spaced-apart impellers, while on each side of the group of sausage links a vane (41) of the impellers (8, 9, 52, 54) forms a lateral boundary for the sausage links, and during rotation of the impellers (8, 9, 52, 54) in opposite directions a group of sausage links (4) is laterally guided at two opposite ends of the sausage links (20) by adjacent vanes (41) of an impeller (8, 9, 52, 54) on their path of movement toward the packaging item (35), and on further rotation of the impellers (8, 9, 52, 54) the group of sausage links is released from the vanes (41) of the adjacent impellers (8, 9, 52, 54) and can be placed onto or into the packaging item (35).

2. The apparatus according to claim 1,
wherein each impeller (8, 9, 52, 54) has four vanes (41) which substantially form the shape of a cross.

3. The apparatus according to at least one of the preceding claims,
**characterized in that** the surface of the vanes (41) is substantially planar.

4. The apparatus according to at least one of the preceding claims,
**characterized in that** the surface of the vanes (41) is at least partially concavely and/or convexly curved, such that during motion between the vanes (52, 54), the sausage link (20) or the group of sausage links (4) is guided in a controlled manner and/or is additionally accelerated or delayed.

5. The apparatus according to at least one of the preceding claims,
**characterized in that** the impellers (8, 9, 52, 54) are designed with equally spaced-apart vanes (41) which form receiving and conveying chambers for a sausage link (20) or group of sausage links (4) during their rotation in opposite directions.

6. The apparatus according to any one of claims 1 to 5,
**characterized in that** the two impellers (8, 9, 52, 54) have rotational axes (49) arranged parallel to each other and are preferably spaced apart from each other in such a way that the distance between the rotational axes (49) is greater than the length of the group of sausage links (4).

7. The apparatus according to any one of the preceding claims,
**characterized in that** the apparatus has an adjusting device by means of which the distance of the impellers (8, 9, 52, 54) from each other can be varied, in particular in a range which corresponds substantially to the width of the group of sausage links (4) to be placed.

8. The apparatus according to any one of claims 1 to 7, having
a feeder belt unit (26) comprising a circulating conveyor element (22) for feeding groups of sausage links (4) in a feeding direction to the conveyor device (5) or to the conveyor devices (5, 7); and/or
a stop member (38) which limits the feed path of the groups of sausage links (4) in the feeding direction and which guides the group of sausage links (4) in the feeding direction until it is placed into the packaging item (35), wherein the stop member (38) preferably can be adjusted in the feeding direction and against the feeding direction of the groups of sausage links (4). and/or the stop member (38) has a drive unit for moving the stop member; and/or
both impellers (8, 9, 52, 54) consists at least partially of plastic, in particular of food-safe plastic.

9. The apparatus according to any one of the preceding claims,
**characterized by** a coupling means having a receptacle for an impeller and configured to provide a detachable connection to the impeller.

10. The apparatus according to any one of the preceding claims,
**characterized by** at least one electrical drive unit (36) for driving the rotatable conveyor devices (5, 7), in particular the impellers (8, 9, 52, 54), wherein the drive unit (36) preferably has a linear motor or stepper motor for driving the at least one impeller (8, 9, 52, 54).

11. The apparatus according to claim 10,
**characterized in that** the drive unit (36) has a controller for controlling the stop positions, movements and accelerations of the both impellers (8, 9, 52, 54).

12. A method for transferring groups of sausage links (4) into a packaging item (35), said method comprising the steps of:
- loading a group of sausage links (4) into a transfer apparatus (6) according to any one of claims 1 to 10 having at least two co-operating impellers (8);
- rotating of the both impellers (8, 9, 52, 54), in particular by an angle of 90°, about its rotational axis (49);
- releasing the group of sausage links (4) into the packaging item (35);
placing a group of sausage links (20) arranged parallel and adjacent to each other on two adjacent vanes (41) of two spaced-apart impellers (8, 9, 52, 54), while on each side of the group of sausage links a vane (41) of the impellers (8, 9, 52, 54) guides the sausage links laterally;
- rotating the impellers (8, 9, 52, 54) in opposite directions, while the ends of the sausage links (20) are laterally guided by vanes (41) of adjacent impellers (8, 9, 52, 54) on the path of movement toward the packaging item (35);
- placing the group of sausage links (4) into the packaging item (35).

13. The method according to claim 12, comprising the additional step of:
- collating sausage links (20) into groups, in particular with the aid of a triangular belt (12).

14. A system (3) for collating and loading sausage links into packaging items, said system comprising at least:
- a feeder unit for feeding single sausage links (20) transversely to the direction of transport onto a feeder belt unit (26), wherein the distance between the sausage links (20) on the feeder belt unit (26) is definable;
- a feeder belt unit (26) for guiding the sausage links (20) from the feeder unit to a means (6) for placing groups of sausage links into a packaging item;
- a triangular belt (12) for collating sausage links (20) and forming groups of sausage links (4);
- an apparatus (6) according to any one of claims 1 to 10 for transferring the groups of sausage links (4) into a packaging item (35).

## Revendications

1. Dispositif de transfert d'au moins une saucisse ou portions alimentaires, en particulier d'un groupe de saucisses (4), dans un emballage (35),
dans lequel deux dispositifs de transport (5, 7) coopérant l'un avec l'autre sont prévus avec respectivement au moins une ailette saillante (41) et sont agencés à distance l'un de l'autre de sorte que l'au moins une saucisse (4) puisse être placée simultanément sur deux ailettes (41) des dispositifs de transport (5, 7) espacés, et que par la rotation en sens contraire synchrone des dispositifs de transport (5, 7) l'au moins une saucisse (4) puisse être déposée par les ailettes (41) sur ou dans l'emballage (35), dans lequel les deux dispositifs de transport (5, 7) sont réalisés respectivement en tant que roue d'ailette (8, 9, 52, 54) avec respectivement au moins deux, de manière particulièrement préférée quatre, ailettes (41) espacées sensiblement uniformément, et
les roues d'ailette (8, 9, 52, 54) sont réalisées et dimensionnées de sorte que deux ailettes opposées (41) des roues d'ailette (8, 9, 52, 54) dans la position de réception forment une surface d'appui sensiblement horizontale pour un groupe de saucisses (4),
**caractérisé en ce que** deux roues d'ailette espacées (8, 9, 52, 54) des deux dispositifs de transport (5, 7) sont réalisées avec respectivement quatre ailettes (41) et peuvent tourner en sens contraires de sorte qu'un groupe de saucisses (4) agencés parallèlement et de manière contigüe les unes aux autres puisse être déposé sur deux ailettes contigües (41) des roues d'ailette espacées, alors que sur chaque côté du groupe des saucisses respectivement une ailette (41) des roues d'ailettes (8, 9, 52, 54) forme une délimitation latérale pour les saucisses, et pendant une rotation en sens contraires des roues d'ailette (8, 9, 52, 54) un groupe de saucisses (4) est guidé latéralement aux deux extrémités opposées des saucisses (20) par des ailettes contigües (41) d'une roue d'ailette (8, 9, 52, 54) sur sa voie de déplacement en direction de l'emballage (35), et lors de la suite de la rotation des roues d'ailette (8, 9, 52, 54) le groupe de saucisses (4) sort des ailettes (41) des roues d'ailette contiguës (8, 9, 52, 54) et peut être déposé sur ou dans l'emballage (35).

2. Dispositif selon la revendication 1,
complété en ce que chaque roue d'ailette (8, 9, 52, 54) présente quatre ailettes (41) qui forment sensiblement une croix.

3. Dispositif selon au moins l'une des revendications précédentes,
**caractérisé en ce que** la surface des ailettes (41) est sensiblement plane.

4. Dispositif selon au moins l'une des revendications précédentes,
**caractérisé en ce que** la surface des ailettes (41) est réalisée au moins partiellement courbée de manière concave et/ou convexe de sorte que la saucisse (20) ou le groupe de saucisses (4) soit guidé de manière ciblée pendant le mouvement entre les roues d'ailette (52, 54) et/ou en outre accéléré ou ralenti.

5. Dispositif selon au moins l'une des revendications précédentes,
**caractérisé en ce que** les roues d'ailettes (8, 9, 52, 54) sont réalisées avec des ailettes (41) espacées uniformément qui forment, pendant leur rotation en sens contraires, des chambres de réception et de transport pour une saucisse (20) ou un groupe de saucisses (4).

6. Dispositif selon l'une des revendications 1 à 5,
**caractérisé en ce que** les deux roues d'ailette (8, 9, 52, 54) présentent des axes de rotation (49) agencés parallèlement l'un à l'autre et sont espacées de préférence de sorte que la distance entre les axes de rotation (49) soit supérieure à la longueur du groupe de saucisses (4).

7. Dispositif selon l'une des revendications précédentes,
**caractérisé en ce que** le dispositif présente un dispositif de réglage au moyen duquel la distance entre les roues d'ailette (8, 9, 52, 54) peut être variée entre l'une et l'autre, en particulier dans une zone qui correspond sensiblement à la largeur des groupes de saucisses (4) à insérer.

8. Dispositif selon l'une des revendications 1 à 7, présentant une unité de bande d'amenée (26) avec un élément de transport (22) tournant pour l'amenée de groupes de saucisses (4) dans un sens d'amenée au dispositif de transport (5) ou aux dispositifs de transport (5, 7) ; et/ou
une butée (38) qui délimite la course d'amenée des groupes de saucisses (4) dans le sens d'amenée et guide le groupe de saucisses (4) jusqu'au dépôt dans l'emballage (35) dans le sens d'amenée, dans lequel de préférence la butée (38) est réglable dans le sens d'amenée et dans le sens contraire du sens d'amenée des groupes de saucisses (4) et/ou la butée (38) présente une unité d'entraînement pour le déplacement de la butée ; et
les deux roues d'ailette (8, 9, 52, 54) se composent au moins partiellement de matière plastique, en particulier de matière plastique alimentaire.

9. Dispositif selon l'une des revendications précédentes,
**caractérisé par** un dispositif de couplage qui présente un logement de roue d'ailette et est aménagé afin de mettre à disposition une liaison amovible avec la roue d'ailette.

10. Dispositif selon l'une des revendications précédentes,
**caractérisé par** au moins une unité d'entraînement électrique (36) pour l'entraînement des dispositifs de transport rotatifs (5, 7), en particulier des roues d'ailette (8, 9, 52, 54), dans lequel l'unité d'entraînement (36) présente de préférence un moteur linéaire ou un moteur pas à pas pour l'entraînement des deux roues d'ailette (8, 9, 52, 54).

11. Dispositif selon la revendication 10, **caractérisé en ce que** l'unité d'entraînement (36) présente un dispositif de commande pour la commande en particulier des positions de retenue, mouvements et accélérations des deux roues d'ailette (8, 9, 52, 54).

12. Procédé de transfert de groupes de saucisses (4) dans un emballage (35), comprenant les étapes suivantes :
- l'introduction d'un groupe de saucisses (4) dans un dispositif de transfert (6) selon l'une des revendications 1 à 10 qui présente au moins deux roues d'ailette (8, 9, 52, 54) coopérant l'une avec l'autre ;
- la rotation des deux roues d'ailette (8, 9, 52, 54) en particulier autour d'un angle de 90°, le long de son axe de rotation (49) ;
- le passage du groupe de saucisses (4) dans l'emballage (35) ;
- le dépôt d'un groupe de saucisses (20) agencées parallèlement et à distance les unes des autres sur deux ailettes contiguës (41) de deux roues d'ailette espacées (8, 9, 52, 54), alors que sur chaque côté du groupe de saucisses respectivement une ailette (41) des roues d'ailette (8, 9, 52, 54) guide latéralement les saucisses ;
- la rotation en sens contraires des roues d'ailette (8, 9, 52, 54) alors que les extrémités des saucisses (20) sont guidées latéralement par des ailettes (41) de roues d'ailette contigües (8, 9, 52, 54) sur sa voie de déplacement en direction de l'emballage (35) ;
- le dépôt du groupe de saucisses (4) dans l'emballage (35).

13. Procédé selon la revendication 12, présentant en outre l'étape suivante :
- le regroupement de saucisses (20) en particulier à l'aide d'une bande triangulaire (12).

14. Système (3) pour le regroupement et l'insertion de saucisses dans des emballages, comprenant au moins :
- un dispositif d'amenée pour l'amenée de saucisses individuelles (20) transversalement au sens de transport sur une unité de bande d'amenée (26), dans lequel la distance entre les saucisses (20) peut être définie sur l'unité de bande d'amenée (26) ;
- une unité de bande d'amenée (26) pour le guidage des saucisses (20) du dispositif d'amenée vers un dispositif (6) pour l'insertion de groupes de saucisses dans un emballage ;
- une bande triangulaire (12) pour le regroupement de saucisses (20) et la formation de groupes de saucisses (4) ;
- un dispositif (6) pour le transfert des groupes de saucisses (4) dans un emballage (35) selon l'une des revendications 1 à 10.
